Europäisches Patentamt

European Patent Office

Office européen des brevets

(11) Publication number: **0 147 865**
**B1**

## EUROPEAN PATENT SPECIFICATION

(45) Date of publication of patent specification: **17.11.88**

(21) Application number: **84116423.9**

(22) Date of filing: **28.12.84**

(51) Int. Cl.⁴: **H 04 Q 11/04,** H 04 M 11/06, H 04 L 11/20

(54) **Digital exchange system.**

(30) Priority: **29.12.83 JP 247703/83**

(43) Date of publication of application:
**10.07.85 Bulletin 85/28**

(45) Publication of the grant of the patent:
**17.11.88 Bulletin 88/46**

(84) Designated Contracting States:
**DE FR GB SE**

(56) References cited:
INTERNATIONAL SWITCHING SYMPOSIUM, 7th-11th May 1979, vol. 2, paper 23B1, pages 515-522, Paris, FR; C. MOSSOTTO et al.: "Technical aspects in the implementation of a public switched network for data"

PROCEEDINGS OF THE 4TH INTERNATIONAL CONFERENCE ON COMPUTER COMMUNICATION, Kyoto, 26th-29th September 1978, pages 557-563, North-Holland Publishing Company, Amsterdam, NL; R. PARODI et al.: "Evaluation of different data communication media within an integrated telecommunication system"

(73) Proprietor: **FUJITSU LIMITED**
**1015, Kamikodanaka Nakahara-ku**
**Kawasaki-shi Kanagawa 211 (JP)**

(72) Inventor: **Hatano, Takashi**
**8-3-15, Tamagawakuen Machida-shi**
**Tokyo 194 (JP)**
Inventor: **Nara, Takashi**
**Hoshikawa Shurosu 701 15-5, Kawabe-cho**
**Hodogaya-ku**
**Yokohama-shi Kanagawa 240 (JP)**
Inventor: **Kawato, Yutaka**
**1-21-10, Nakarokugo Ota-ku**
**Tokyo 144 (JP)**
Inventor: **Okada, Sumie**
**Fujitsu dai-7 Fujigaoka-ryo 2-40-4, Fujigaoka**
**Midori-ku Yokohama-shi Kanagawa 227 (JP)**

(74) Representative: **Lehn, Werner, Dipl.-Ing. et al**
**Hoffmann, Eitle & Partner Patentanwälte**
**Arabellastrasse 4**
**D-8000 München 81 (DE)**

Courier Press, Leamington Spa, England.

**EP 0 147 865 B1**

(56) References cited:
**PROCEEDINGS OF THE 6TH INTERNATIONAL CONFERENCE ON COMPUTER COMMUNICATION, London, 7th-10th September 1982, pages 37-42, North-Holland Publishing Company, Amsterdam, NL; M. ROMAGNOLI et al.: "ISDN capabilities in a digital local exchange"**

**INTERNATIONAL SYMPOSIUM ON SUBSCRIBER LOOPS AND SERVICES, 20th-24th September 1982, pages 62-65, Toronto, CA; G.M.J. HAVERMANS: "Digital subscriber lines to PRX/D"**

**INTERNATIONAL SWITCHING SYMPOSIUM, 21st-25th September 1981, vol. 4, paper 42 B 6, pages 1-8, Montreal, CA; R. MONTEMURRO et al.: "Customer access to the ISDN facilities" GLOBECOM '82 IEEE GLOBAL**

**TELECOMMUNICATIONS CONFERENCE, 29th November - 2nd December 1982, vol. 3, paper F2.3, pages 1210-1214, Miami, US; R. LUEDER: "An implementation scheme for ISDN multi-service subscriber access"**

## Description

The present invention relates to a digital exchange system of the type comprising a plurality of exchange terminals connected, via respective transmission lines and network terminations, with corresponding terminal equipment for subscribers; a digital network operative to switch lines between one subscriber and another subscriber and to deal with only a high bit-rate stream of channel signals; and a bit-rate conversion unit including multiplex means located between said digital network and said exchange terminals and operable to match low bit-rate channel signals of packet format with high bit-rate channel signals transferred with said high bit-rate stream, where said low bit-rate channel signals and said high bit-rate channel signals are transferred, respectively, in a high bit-rate channel and low bit-rate channel, both channels being formed in each of said transmission lines and said high bit-rate channel signals, composed of M (M is positive integer) kbit/s signals, being communicated directly to and from said digital network.

Such a system is known from "Customer Access to the ISDN facilities" by Montemurro and Villani, published in the proceedings of the International Switching Symposium 1981.

Information is rapidly becoming a marketable commodity around the world. Japan is now testing a highly advanced "information network service" (INS) system. Other countries are trying out the widely known "integrated service data network" (ISDN) on a commercial basis. The digital exchange system according to the present invention is applicable to both INS and ISDN. The following explanation will be primarily made with reference to ISDN.

In an ISDN, special transmission lines are set aside to connect subscribers and a plurality of digital exchange offices. Each transmission line includes two identical "B" channels and one "D" channel, i.e. signals pass through 2B+D channels. According to the CCITT protocol, the B channels transmit channel signals at a bit rate of 64 kbit/s. Usually, the B channels are used for transmission of an 8 bit voice information signals obtained with 8 kHz sampling.

By the same protocol, the D channel transmits channel signals at a bit rate of 16 kbit/s. The D channel may be used for transmission of signalling information, telemetry information and message-oriented data information.

B and D channel signals from subscribers are transferred to a digital exchange office, where the required switching operations are performed. The switching operations are carried out at a bit rate of 64 kbit/s in view of the maximum 64 kbit/s bit rate of the B channel signals. Accordingly, no adjustment in the bit rate is needed at the digital exchange office, for the B channel signals. Adjustment for the D channel signals, however, is inevitable, due to the low 16 kbit/s bit rate.

To match the bit rates of the B channel signals and D channel signals, the inventors have previously attempted to reform the bit stream of the D channel signals to adjust the bit rate of the D channel signals to substantiate that of the B channel signals. For example, they have reformed a digital D channel signal having a logic of "10" at 16 kbit/s to one having a logic of "1111 0000" at 64 kbit/s. In other words, they changed the original D channel signal "10" to match the B channel signal without changing the inherent logic information ("10") by increasing the original bit rate for the D channel signal four

$$\left(\frac{64 \text{ kbit/s}}{16 \text{ kbit/s}}\right) \text{ times.}$$

This is, however, clearly disadvantageous in terms of the transmission efficiency of the digital exchange system as the reformed D channel signal, e.g. "1111 0000" is composed of only one useful bit "1" and "0" bit and three useless "1" bits and three useless "0" bits.

In the system described in the above-mentioned paper from the International Switching Symposium, message-oriented data information is supplied to a central processor of the digital exchange and is not transmitted to the digital network. Furthermore, no proposals are made for handling incoming D channel signals.

In a paper entitled "Technical aspects in the implementation of a public switched network for data" by Mossotto et al from International Switching Symposium 1979, mention is made of the possibility of submultiplexing data user streams in a telecommunications network.

On the basis of a cost comparison, it is concluded that submultiplexing is not advantageous and should not be used for inter-office signals in a digital local network.

A system for direct connection of dedicated data subscriber lines to a local data exchange is also disclosed in which individual low speed data signals from low speed terminals are multiplexed for transmission on a high speed line.

No discussion of the use of multiplexing in an ISDN having B and D channels is contained in this document.

In a paper entitled "Evaluation of Different Data Communication Media within an Integrated Telecommunication System" by Parodi et al from the proceedings of the fourth international conference on computer communication 1978, multiplexing of data channels between a data terminal (DTE) and a packet switching node is discussed. No disclosure is made of connection of D channels of an ISDN to a digital network of a digital exchange.

An object of the present invention is to provide a digital exchange system with improved transmission and receiving facilities for low bit-rate side channel signals, such as D channel signals.

According to the present invention, the high bit-rate channel signals of M kbit/s are communicated directly to and from a digital network in a two-way mode. Low bit-rate channel signals of N kbit/s (M and N are positive integers and M>N), are communicated to the digital network in a one-way mode through a multiplex means, and communicated from the digital network in the opposite way through a demultiplex means. The multiplex means multiplexes [M/N] ([ ] denotes Gauss' notation) or less outgoing low bit-rate channel signals, while the demultiplex means demultiplexes [M/N] or less incoming low bit-rate channel signals.

The present invention will be more apparent from the ensuing description with reference to the accompanying drawings, wherein:

Fig. 1 illustrates a general construction of a digital exchange system according to the present invention;

Fig. 2 depicts signal allocations processed by the digital exchange system of Fig. 1;

Fig. 3 depicts signal allocations established under a known method;

Fig. 4 shows in slightly more detail the construction of the digital exchange system shown in Fig. 1;

Fig. 5 is a block diagram of the multiplex/demultiplex processor shown in Fig. 4, fabricated as a computer aided unit;

Fig. 6A shows a frame format of the outgoing low bit-rate channel signal, not yet multiplexed;

Fig. 6B shows a frame format of the incoming low bit-rate channel signals, not yet demultiplexed;

Fig. 7A is a general flow chart of the multiplexing operation carried out by the microprocessor of Fig. 5; and

Fig. 7B is a general flow chart of the demultiplexing operation carried out by the microprocessor of Fig. 5.

Description of the preferred embodiments

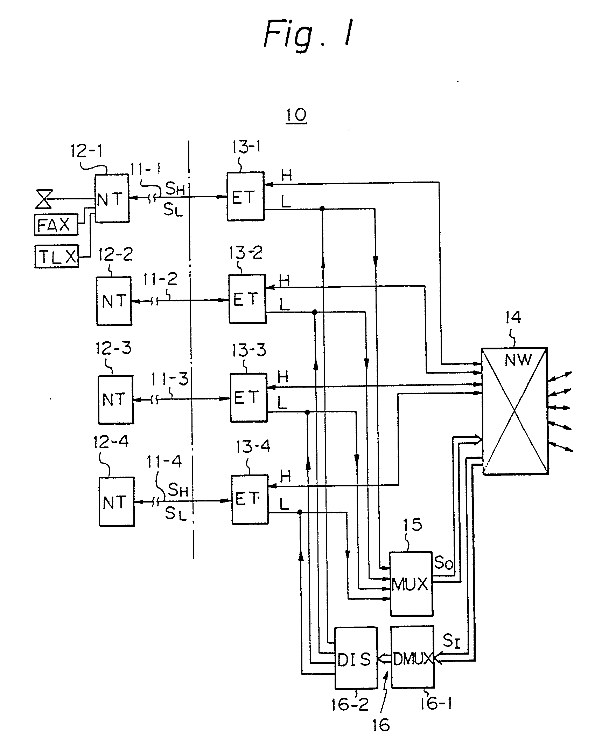

Fig. 1 illustrates a general construction of a digital exchange system according to the present invention. In Fig. 1, a digital exchange system 10 is located at the right side relative to a vertical chain-dotted line. The left side relative to the line represents the subscribes' side. The digital exchange system 10 is connected with each of the subscribers via individual transmission lines 11-1 through 11-4 (only four subscribers are illustrated for brevity). The transmission lines 11-1 through 11-4 connect, at one ends, to individual exchange terminals (ET) 13-1 through 13-4 and, at the other ends, with individual network terminations 12-1 through 12-4. Each of the network terminations is provided with terminal equipment, such as digital telephones, facsimiles, and telexes, as representatively illustrated for the network termination 12-1.

Communication signals are transferred with the digital exchange system via the individual transmission lines 11-1 through 11-4. Each of these transmission lines transfers high bit-rate channel signals $S_H$ and low bit-rate channel signals $S_L$ by a high bit-rate channel and a low bit-channel, respectively. The high bit-rate channel and the low bit-channel correspond, in an ISDN, to the aforesaid B channels and D channel, respectively.

In the digital exchange system 10, the exchange terminals 13-1 through 13-4 are mounted at input/output ports and deal with the high and low bit-rate channel signals $S_H$ and $S_L$. The high bit-rate channel signals are directly communicated to and from a digital network (NW) 14 in a two-way mode. This is because the digital network 14 is inherently designed to perform switching operations adapted to the high bit-rate channel signals. In other words, only a high bit-rate stream can flow across the digital network 14. Accordingly, the low bit-rate channel signals $S_L$ cannot be dealt with by the digital network 14, if the signals $S_L$ are not processed and are instead left as they are. For this, according to the present invention, particular signal processings are effected for the low bit-rate channel signals, as explained immediately below.

As seen from Fig. 1, a multiplex means (MUX) and a demultiplex means (DMUX+DIS) 16 are incorporated in the digital exchange system 10. The multiplex means 15 operates to multiplex a plurality of sets of the outgoing low bit-rate channel signals (L) given from the related exchange terminals 13-1 through 13-4, and the thus multiplexed low bit-rate channel signals are supplied to the digital network 14. The multiplexed low bit-rate channel signals run with the high bit-rate stream, and therefore, can be smoothly accepted by the digital network 14. Conversely, the multiplexed incoming low bit-rate channel signals, with the high bit-rate stream, are output from the digital network 14 and then supplied to the demultiplex means 16, including a demultiplexer (DMUX) 16-1 and a distributor (DIS) 16-2. The multiplexed incoming low bit-rate channel signals are supplied from the multiplex means of the other side (not shown but identical to the multiplex means 15). The demultiplexer 16-1 operates to demultiplex the high bit-rate stream into a plurality, sets of low bit-rate channel signals $S_L$, each of which sets is distributed to the corresponding exchange terminal (13) and sent toward its specified destination, i.e., the terminal equipment.

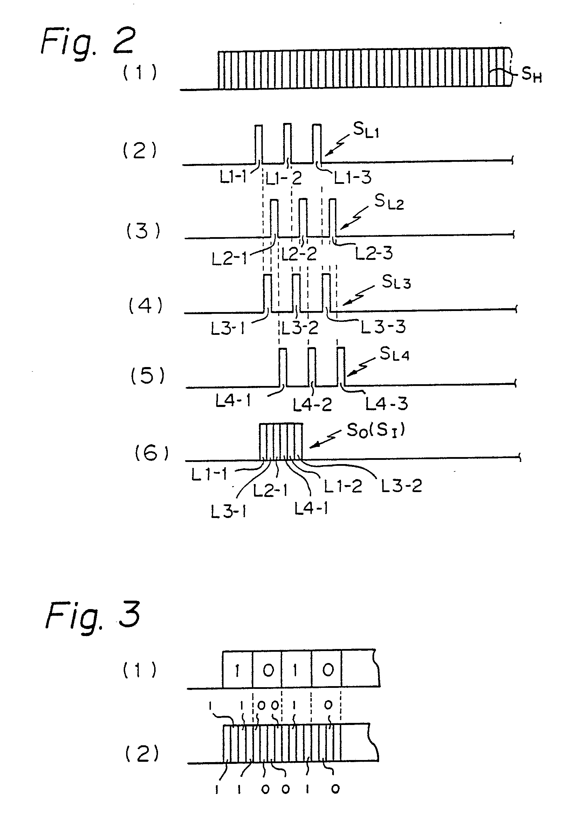

Figure 2 depicts signal allocations processed by the digital exchange system of Fig. 1. The essential point will be clarified with reference to the signal allocations of Fig. 2, in comparison with signal allocations of Fig. 3. Figure 3 depicts signal allocations established under a known method. As previously explained regarding the related art, according to the known method, a low bit-rate channel signal having, for example, logic "1010" (refer to row (1) of Fig. 3, is reformed to a high bit-rate stream as shown in row (2) of Fig. 3 so as to be accepted by the digital network 14. The high bit-rate stream is composed of logic "11110000 . . .". The above-mentioned method is, however, poor in view of transmission efficiency, because the major part of the stream delivers useless signals, as mentioned previously.

Referring to Fig. 2, the high bit-rate channel signal $S_H$ (refer to Fig. 1) is illustrated in row (1). The signal $S_H$ has a bit rate of M kbit/s (M is a positive integer). The signal $S_H$ corresponds, if in the ISDN, to the aforesaid B channel signal, in which the M is specified to be 64. Rows (2) through (5) of Fig. 2 represent the low bit-rate channel signals $S_{L1}$, $S_{L2}$, $S_{L3}$, and $S_{L4}$ issued from the network terminations 12-1 through 12-4 and produced from the corresponding exchange terminals 13-1 through 13-4, respectively. The digital pulses forming the signal $S_{L1}$ are allocated in time series as shown by characters L1-1, L1-2, and L1-3. This is true of the remaining signals $S_{L2}$, $S_{L3}$, and $S_{L4}$ as well. Each of these signals $S_{L1}$ through $S_{L4}$ has a bit rate of N kbit/s (N is a positive integer and M>N) and corresponds, if in the ISDN, to the aforesaid D channel signal, in which N is specified to be 16.

According to the present invention, the multiplex means 15 operates to multiplex [M/N] or lower outgoing low bit-rate channel signals ($S_L$). If M and N are selected as 70 and 18, respectively, the multiplex number [M/N] will be 3 at most. This is because [70/18] is 3. In the example concerned, four (64/16) outgoing low bit-rate channel signals $S_{L1}$ through $S_{L4}$ are multiplexed to obtain a multiplexed outgoing low bit-rate channel signal $S_O$ as shown in row (6) of Fig. 2. The multiplexed signal $S_O$ is produced, as illustrated in Fig. 1, from the multiplex means 15 and supplied to the digital network 14. Since the signal $S_O$ is transferred with the high bit-rate stream, as is the high bit-rate channel signal $S_H$, the signal $S_O$ can be smoothly accommodated in the digital network 14.

In a similar way, the multiplexed incoming low bit-rate channel signal $S_I$ is supplied, with the high bit-rate stream, from the digital network 14 to the demultiplexer 16-1. In this case the signal $S_I$ has the same signal allocations as that of the signal $S_O$ illustrated in row (6) of Fig. 2. The multiplexed digital pulses are distributed to the corresponding exchange terminals 13-1 through 13-4 by means of the distributor 16-2, as illustrated in rows (2) through (5) of Fig. 2.

The present invention is advantageous in that the high bit-rate stream does not deliver any useless signals, as clarified in row (6) by the individual useful digital pulses, such as L1-1, L3-1, and L4-1. Contrary to the above, according to the known method, the identical high bit-rate stream delivers large amounts of meaningless digital pulses which are used only for matching with the high bit-rate stream, as clarified in row (2) of Fig. 3.

Further, according to the present invention, the low bit-rate channel can deal with not only control signals, but also data signals, if necessary. In an ISDN, the D channel (corresponding to the low bit-rate channel) deals with only such control signals. This is because the low bit-rate channel signal of the present invention can smoothly be accommodated, after being multiplexed, in the digital network 14. On the other hand, the high bit-rate channel transfers voice signals and data signals, as in the B channel of the ISDN. In this case, the data signals transferred in the high bit-rate channel (B channel) can contain information of a much higher speed and much larger amount, such as television signal information, than data signals transferred in the low bit-rate channel (D channel), for example, telex signal information.

When the mixture of the control and data signals are communicated through the low bit-rate channel (D channel), it is best to deal with them in a so-called "packet" format. The packet format is created in each of the terminal equipment and can be set up according to the known high-level data link control (HDLC) method, employed for the X.25 protocol of CCITT. The data signal packets can be handled in a packet switching digital network (PSDN) located outside the digital exchange system 10. The control signal packets are processed in a call processor (mentioned hereinafter) and used for the switching control of the data signals which run through the digital network 14.

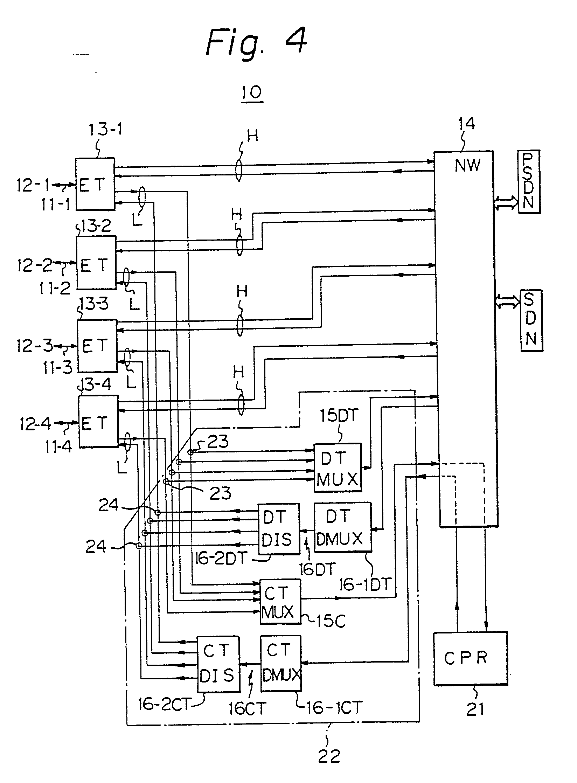

Figure 4 shows in a slightly more detailed manner the construction of the digital exchange system shown in Fig. 1. In Fig. 4, the call processor is represented by CPR 21, which achieves the switching control for the digital network (NW) 14. Through the network 14, the high bit-rate channel signals, in the form of packets, if necessary, and the low bit-rate channel data signals, in the form of packets, are communicated with the ordinary signal switching digital network (SDN) and the packet switching digital network (PSDN). The multiplexed and demultiplexed low bit-rate channels signals are processed by a processor 22.

The processor 22 features the present invention. That is, the processor 22 basically includes the multiplex means 15 and the demultiplex means 16 shown in Fig. 1. It is preferable to divide the multiplex means 15 and the demultiplex means 16 into a data (DT) side and control (CT) side, as shown in block 22. The data side means include the multiplex means (DT · MUX) 15DT, the demultiplexer (DT · DMUX) 16-1DT, and the distributor (DT · DIS) 16-2DT. Similarly, the control side means includes the multiplex means (CT · MUX) 15CT, the demultiplexer (CT · DMUX) 16-1CT, and the distributor (CT · DIS) 16-2CT. The data side signals and the control side signals are separated by data/control discrimators 23 when these signals are to be multiplexed. The demultiplexed data and control signals are separated by data/control discriminators 24. The discriminations can be achieved with the use of a data/control discrimination flag inserted in the packet format. It should be understood here that separation between the data side and the control side is not essential to the present invention.

The processor 22 of Fig. 4 is most preferably realized as a computer aided unit.

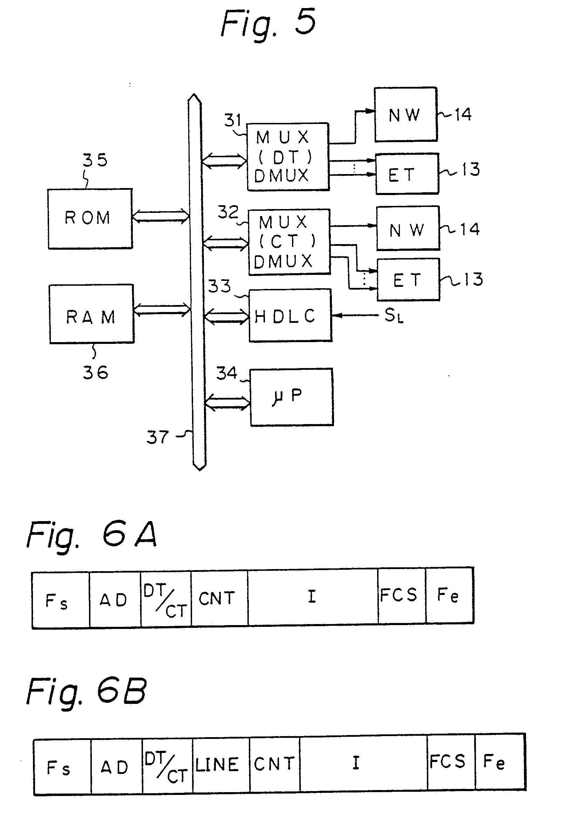

Figure 5 is a block diagram of the multiplex/demultiplex processor shown in Fig. 4, fabricated as a computer aided unit. In Fig. 5, the computer aided multiplex/demultiplex processor 22 is supervised by a microprocessor (μp) 34. The microprocessor 34 operates according to control programs stored in a read-only memory (ROM) 35. All the low bit rate channel signals $S_L$, in the form of packets, are applied to an HDLC unit 33 once they appear along the lines between the exchange terminals (ET) 13-1 through 13-4 and the digital network 14. The frame formats of the signals are shown in Figs. 6A and 6B. Figure 6A shows a frame format of the outgoing low bit-rate channel signal, not yet multiplexed. Figure 6B shows a frame format of the incoming low bit-rate channel signal, not yet demultiplexed. Referring to Figs. 6A and 6B, the characters Fs and Fe denote a start flag, from which the packet signal starts, and an end flag, at which the packet signal ceases. The character AD denotes an address field indicating a destination of the packet, DT/CT denotes a data/control discrimination flag indicating whether the related packet delivers the data signal or the control signal, CNT denotes a control field containing control information for the HDLC unit 33 (Fig. 5), I denotes an information field regarding either data or control, and FCS denotes a frame check sequence field used for error detection of the related packet. The character LINE in Fig. 6B denotes an identification field indicating to which one of the exchange terminals (13-1 to 13-4) the related packet should be directed. The major part of the frame format shown in Figs. 6A and 6B is not new. The DT/CT flag and the identification field LINE are relevant to the present invention.

Returning to Fig. 5, various sets of information contained in the frame format (Figs. 6A and 6B) are stored once in a random-access memory (RAM) 36 and then supplied to a data side (DT) input/output interface 31 and a control side (CT) input/output interface 32. Each of the interfaces 31 and 32 is functionally divided into a multiplex part (MUX) and a demultiplex part (DMUX).

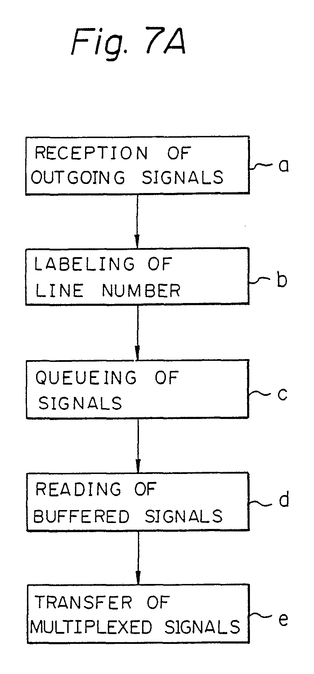

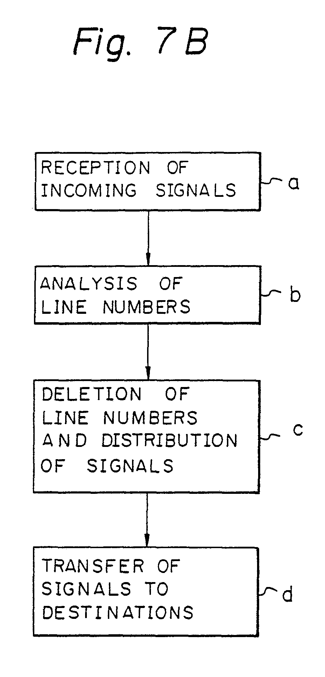

Figure 7A is a general flow chart of the multiplexing operation carried out by the microprocessor of Fig. 5. Figure 7B is a general flow chart of the demultiplexing operation carried out by the microprocessor of Fig. 5. In Fig. 7A, the outgoing low bit-rate channel signals are received, at one time, by the HDLC unit 33 (step a). Here, each of the received signals has the frame format of Fig. 6A. Then, an individual line number is given to each of the received signals at the identification field LINE (step b). Thus, the frame format of the packet is made identical to that of Fig. 6B. The individual line number indicates the corresponding numbers of the exchange terminals 13-1 through 13-4, such as 1, 2, 3, and 4, from which respective outgoing signals are issued. The packet signals are sequentially loaded in a buffer queue formed in, for example, a part of the RAM 36 (step c). A plurality of the thus buffered signals are read from the buffer queue to set up multiplexed signals and are sent from the interface 31 or 32 (step d). The multiplexed low bit-rate signals are transferred to the digital network 14 (step e).

Referring to Fig. 7B, the incoming low bit-rate channels signals, not yet demultiplexed, are received, at one time, by the HDLC unit 33 (step a). Here, each of the received signals has the frame format of Fig. 6B. Then, the identification fields, indicative of the lines, of each incoming signal packet are analyzed (step b). Once the corresponding lines for each packet are detected, the line numbers are no longer needed. Therefore, the identification fields are deleted, as shown in Fig. 6A. At the same time, the packets are distributed to individual lines via a demultiplex part in the interface 31 or 32. The distributed signals are then transferred to individual destinations.

The above-mentioned outgoing low bit-rate channel signal, together with the outgoing high bit-rate channel signal, are transferred via an individual transmission line, for example, 11-1 in Fig. 1. Also, the above-mentioned incoming low bit-rate channel signal, together with the incoming high bit-rate channel signal, is transferred via the same transmission line 11-1. In this case, the transmission line 11-1 is usually made of conventional paired lines. This is also true of other transmission lines. Accordingly, so-called full-duplex communication must be established via the paired lines in a two-way mode for both the outgoing and incoming signals, transferred thereon. Full-duplex communication is achieved by means of the network termination (shown by 12-1 through 12-4 in Fig. 1) and the corresponding exchange terminals (shown by 13-1 through 13-4 in Figs. 1 and 4). Full-duplex communication can be performed under the known echo-cancellation method or known time compression multiplex method. According to the echo-cancellation method, both incoming and outgoing channel signals are given to the transmission line 11-1 simultaneously. The network termination 12-1 operates to extract and receive the incoming channel signal only selectively. This extraction is possible due to the fact that the outgoing channel signal is known at the network termination, since it is generated from the network termination side. Similarly, the exchange terminal 13-1 operates to extract and receive the outgoing channel signal only selectively, since the incoming channel signal is known at the exchange terminal 13-1 as it is supplied from the exchange terminal side.

According to the time compression multiplex method, incoming time slots and outgoing time slots are alternately allocated in the transmission line. Therefore, the outgoing channel signals are transferred, from the network termination to the exchange terminal, every time the outgoing time slots exists, while the incoming channel signals are transferred, from the exchange terminal to the network termination, every time the incoming time slot exists. Due to this alternate transfer, the method is also called, the "ping-pong" transmission method.

As explained above in detail, the digital exchange system according to the present invention enables a greatly increased transmission efficiency for low bit-rate channel signals, because the digital network 14 does not deal with any useless signals or dummy signals used only for the matching of speed with the high bit-rate channel signals, i.e., all signals are meaningful.

## Claims

1. A digital exchange system comprising: a plurality of exchange terminals (ET) connected, via respective transmission lines (11-1—11-4) and network terminations (NT), with corresponding terminal equipment for subscribers; a digital network (NW) operative to switch lines between one subscriber and another subscriber and to deal with only a high bit-rate stream of channel signals; and a bit-rate conversion unit (15, 16) including multiplex means (15) located between said digital network (NW) and said exchange terminals (ET) and operable to match low bit-rate channel signals of packet format with high bit-rate channel signals transferred with said high bit-rate stream, where said low bit-rate channel signals and said high bit-rate channel signals are transferred, respectively, in a high bit-rate channel (B) and low bit-rate channel (D), both channels being formed in each of said transmission lines and said high bit-rate channel signals, composed of M (M is positive integer) kbit/s signals, being communicated directly to and from said digital network (14), characterised in that:

all low bit-rate channel signals of said low bit-rate channel (D) composed of N (N is positive integer and M>N) kbit/s signals, are communicated to and from said digital network (14) by way of said bit-rate conversion unit (15, 16), the bit-rate conversion unit further comprising demultiplex means (16);

said multiplex means (15) is arranged to multiplex [M/N] or less outgoing low bit-rate channel signals to obtain outgoing multiplexed low bit-rate channel signals to be supplied to said digital network (14); and

said demultiplex means (16) is arranged to demultiplex [M/N] or less incoming multiplexed low bit-rate channel signals and to distribute them to corresponding exchange terminals (ET).

2. A system as set forth in claim 1, wherein said demultiplex means (16) is comprised of a demultiplexer (16-1) and a distributor (16-2) connected in series therewith, the demultiplexer (16-1) receiving the multiplexed incoming low bit-rate channel signals and demultiplexing them, the thus demultiplexed signals being distributed to respective exchange terminals by means of said distributor (16-2).

3. A system as set forth in claim 2, wherein each of said low bit-rate channel signals is composed of at least a control signal to be given to a call processor (21) which controls said digital network (14) to achieve required switching of said lines with respect to the related high bit-rate channel signals.

4. A system as set forth in claim 3, wherein each of said low bit-rate channel signals is further composed of a data signal to be switched, in said digital network (14), in accordance with the related said control signal.

5. A system as set forth in claim 4, wherein each data signal packet of said data signals is communicated, via said digital network (14), to and from a packet switching digital network.

6. A system as set forth in claim 5, wherein each signal packet constitutes a frame format including therein a data/control discrimination flag (DT/CT) which indicates that the signal packet delivers either data information or control information.

7. A system as set forth in claim 6, wherein each incoming signal packet, not yet demultiplexed, constitutes said frame format further including an identification field (LINE) which indicates to which one of said lines the related signal packet is to be distributed.

8. A system as set forth in claim 7, wherein each of said frame formats is realised together with other bit areas, including a start flag (Fs) indicative of the head of the signal packet, an address field (AD) indicative of a destination, a control field (CNT) used for containing therein packet control information, an information field (I) containing therein either data information or control information, a frame check sequence field (FCS) used for error detection of the signal packet, and an end flag (Fe) indicative of the end of the signal packet.

9. A system as set forth in claim 8, wherein said bit rate conversion unit (15, 16) is fabricated as a multiplex/demultiplex processor (22) comprised of a microprocessor (34) and the following other members supervised thereby, i.e. a read-only memory (ROM) (35) storing therein predetermined control programs to be supplied to the microprocessor (34), a high-level data link control unit (33), subject to X.25 protocol of CCITT, being operative to receive said signal packets appearing between said digital network (14) and said exchange terminals (ET), a random-access memory (RAM) (36) for momentarily storing therein various sets of information contained in each of said signal packets, a control side input/output interface (32) dealing with multiplexed and demultiplexed control signal packets to be supplied, from the RAM (36), respectively to said digital network (14) and the corresponding one of said exchange terminals (ET), and a data side input/output interface (31) dealing with multiplexed and demultiplexed data signal packets to be supplied, from the RAM (36), respectively, to said digital network (14) and the corresponding one of said exchange terminals (ET).

10. A system as set forth in claim 9, wherein each said terminal equipment for subscribers consists of one or more units selected from, at least, a digital telephone unit, a fascimile unit, and a telex unit.

11. A system as set forth in claim 10, wherein full-duplex communication is performed, via each said transmission line (11-1—11-4), between each said network termination (NT) and each corresponding said exchange terminal (ET) under an echo-cancellation method.

12. A system as set forth in claim 10, wherein full-duplex communication is performed, via each said transmission line (11-1—11-4), between each said network termination (NT) and each corresponding said exchange terminal (ET), under a time compression multiplex method.

13. A system as set forth in claim 10, wherein said digital exchange system is constructed as an integrated service data network (ISDN), in which said integers M and N are selected as 64 and 16, respectively.

**Patentansprüche**

1. Digitales Vermittlungssystem mit einer Vielzahl von Vermittlungsstellen (ET), die über entsprechende Übertragungsleitungen (11-1—11-4) und Netzwerkendstellen (NT) mit zugehörigen Endgeräten für Teilnehmer verbunden sind, einem digitalen Netzwerk (NW), das zum Umschalten von Leitungen zwischen einem Teilnehmer und einem anderen Teilnehmer und zum Verarbeiten nur eines Hoch-Bit-Frequenzstroms von Kanalsignalen betriebswirksam ist, und einer Bit-Frequenzumwandlungseinheit (15, 16) mit Multiplexmitteln (15), die zwischen dem digitalen Netzwerk (NW) und den Vermittlungsstellen (ET) angeordnet sind und zum Anpassen von Niedrig-Bit-Frequenzkanalsignalen im Paketformat an mit dem Hoch-Bit-Frequenzstrom übertragene Hoch-Bit-Frequenzkanalsignale betriebswirksam ist, wobei die Niedrig-Bit-Frequenzkanalsignale und die Hoch-Bit-Frequenzkanalsignale jeweils über einen Hoch-Bit-Frequenzkanal (B) und einen Niedrig-Bit-Frequenzkanal (D) übertragen werden, beide Kanäle in jeder der Übertragungsleitungen gebildet sind und die von M (M ist eine positive ganze Zahl), kBit/sec.-Signalen gebildeten Hoch-Bit-Frequenzkanalen direkt zu und von dem digitalen Netzwerk (14) übertragen werden, dadurch gekennzeichnet, daß

alle von N (N ist eine positive ganze Zahl M>N) kBit/sec. - Signalen gebildeten Niedrig - Bit-Frequenzkanalsignale des Niedrig-Bit-Frequenzkanal (D) zu und von dem digitalen Netzwerk (14) über die Bit - Frequenzumwandlungseinheit (15, 16) übertragen werden, wobei die Bit-Frequenzumwandlungseinheit weiterhin Demultiplexmittel (16) enthält,

die Multiplexmittel (15) zum Multiplexen von (M/N) oder weniger der ausgehenden Niedrig - Bit - Frequenzkanalsignale angeordnet sind, um ausgehende multiplexte dem digitalen Netzwerk (14) zuzuführende Niedrig-Bit-Frequenzkanalsignale er erhalten und

die Demultiplexmittel (16) zum Demultiplexen von (M/N) oder weniger der eingehenden multiplexten Niedrig-Bit-Frequenzkanalsignale und zum verteilen dieser an entsprechende Vermittlungsstellen. (ET), angeordnet sind.

2. System nach Anspruch 1, dadurch gekennzeichnet, daß die Demultiplexmittel (16) einen Demultiplexer (16-1) und einen mit diesem in Reihe geschalteten Verteiler (16-2) enthalten, wobei der Demultiplexer (16-1) die multiplexten eingehenden Niedrig-Bit-Frequenzkanalsignale empfängt und diese demultiplext, wobei die derart demultiplexten Signale mittels des Verteilers (16-2) an entsprechenden Vermittlungsstellen verteilt werden.

3. System nach Anspruch 2, dadurch gekennzeichnet, daß jedes der Niedrig-Bit-Frequenzkanalsignale wenigstens ein Steuersignal enthält, das an einen Ruf-Prozessor (21) abgegeben wird, der das digitale Netzwerk (14) steuert, um nötiges Schalten der Leitungen in bezug auf die entsprechenden Hoch-Bit-Frequenzkanalsignale zu erzielen.

4. System nach Anspruch 3, dadurch gekennzeichnet, daß jedes der Niedrig-Bit-Frequenzkanalsignale weiterhin ein Datensignal enthält, das in dem digitalen Netzwerk (14) im Ansprechen auf das entsprechende Steuersignal umgeschaltet wird.

5. System nach Anspruch 4, dadurch gekennzeichnet, daß jedes Datensignalpaket der Datensignale über das digitale Netzwerk (14) zu und von einem digitalen Paketschaltnetzwerk übertragen wird.

6. System nach Anspruch 5, dadurch gekennzeichnet, daß jedes Signalpaket ein Rahmenformat mit einer in diesem enthaltenen Daten/Kontroll-Unterscheidungsmarkierung (DT/CT) enthält, die anzeigt, daß das Signalpaket entweder Dateninformationen oder Steuerinformationen liefert.

7. System nach Anspruch 6, dadurch gekennzeichnet, daß jedes eingehende Signalpaket, das noch nicht demultiplext ist, das Rahmenformat darstellt, das weiterhin ein Identifizierungsfeld (LINE) enthält, das angibt, zu welcher der Leitungen das entsprechende Signalpaket zu verteilen ist.

8. System nach Anspruch 7, dadurch gekennzeichnet, daß jedes der Rahmenformate gemeinsam mit anderen Bit-Bereichen realisiert wird, welche eine auf den Kopf des Signalpakets hinweisende Anfangsmarkierung (Fs), ein auf die Endstation hinweisendes Adressenfeld (AD), ein eine Paketinformation enthaltendes Steuerfeld (CNT), ein entweder Dateninformation oder Steuerinformation enthaltendes Informationsfeld (I), ein zum Erfassen von Fehlern in dem Signalpaket benutztes Rahmenchecksequenzfeld (FCS), und eine auf das Ende des Signalpakets hinweisende Endmarkierung (Fe) enthalten.

9. System nach Anspruch 8, dadurch gekennzeichnet, daß die Bit-Frequenzumwandlungseinheit (15, 16) als Multiplex/Demultiplex-Prozessor (22) ausgebildet ist, der einen Mikroprozessor (34) und die folgenden von diesem überwachten anderen Teile enthält, nämlich einen zum Speichern von vorbestimmten an den Mikroprozessor (34) zu liefernden Steuerprogrammen speichernden ROM-Speicher (35), eine dem X.25-Protokoll von CCITT unterworfene Hochpegel-Datenverbindungssteuereinheit (33), die zum Empfangen der zwischen dem digitalen Netzwerk (14) und den Vermittlungsstellen (ET) vorkommenden Signalpakete betriebswirksam ist, einen RAM-Speicher (36) zum kurzzeitigen Speichern von unterschiedlichen Sätzen von Information, die in jedem der Signalpakete enthalten sind, eine Steuerseiten-Eingang/Ausgangs-Schnittstelle (32), die multiplexte und demultiplexte Steuersignalpakete verarbeitet, die jeweils von dem RAM (36) oder zu dem digitalen Netzwerk (14) und der entsprechenden Vermittlungsstelle (ET) geliefert werden, und eine Datenseite-Eingang/Ausgang-Schnittstelle (31), die multiplexte und demultiplexte Datensignalpakete verarbeitet, die jeweils von dem RAM (36) oder zu dem digitalen Netzwerk (14) und der entsprechenden Vermittlungsstelle (ET) geliefert werden.

10. System nach Anspruch 9, dadurch gekennzeichnet, daß jedes Endgerät für Teilnehmer aus einer oder mehreren Einheiten besteht, die aus wenigstens einer digitaler Telefoneinheit, eine Fascimile-Einheit und einer Telexeinheit ausgewählt sind.

11. System nach Anspruch 10, dadurch gekennzeichnet, daß volle Duplex-Übertragung über jede der Übertragungsleitungen (11-1—11-4.) zwischen jeder Netzwerkendstelle (NT) und jeder entsprechenden Vermittlungsstelle (ET) mittels einer Echolöschmethode ausgeführt wird.

12. System nach Anspruch 10, dadurch gekennzeichnet, daß volle Duplex-Übertragung über jede Übertragungsleitung (11-1—11-4) zwischen jeder Netzwerkendstelle (NT) und jeder entsprechenden Vermittlungsstelle (ET) mittels einer Zeitkomprimierungs-Multiplexmethode ausgeführt ist.

13. System nach Anspruch 10, dadurch gekennzeichnet, daß das digitale Vermittlungssystem als ein integriertes Dienstleistungsdatennetzwerk (ISDN) ausgebildet ist, in dem die ganzen Zahlen M und N zu 64 bzw. 16 gewählt sind.

**Revendications**

1. Système de communications numériques comportant: plusieurs terminaux de communications (ET) connectés, par des lignes de transmission respectives (11-1 à 11-4) et des terminaisons de réseau (NT) avec un équipement terminal correspondant pour des abonnés; un réseau numérique (NW) ayant pour fonction de commuter des lignes entre un abonné et un autre abonné et de ne traiter qu'un courant de débit binaire élevé des signaux de canaux; et une unité de conversion de débit binaire (15, 16) comprenant un dispositif de multiplexage (15) disposé entre ledit réseau numérique (NW) et lesdits terminaux de communications (ET) et ayant pour fonction d'adapter les signaux de canaux à faible débit binaire en format de paquets avec des signaux de canaux de débit binaire élevée transférés avec ledit courant de débit binaire élevé, dans lequel lesdits signaux de canaux de faible débit binaire et lesdits signaux de canaux de débit binaire élevé sont transférés respectivement dans un canal de débit binaire élevé (B) et un canal de faible débit bainaire (D) les deux canaux étant formés dans chacune desdites lignes de transmission et les signaux de canaux de débit binaire élevé, constitués par des signaux de M kbit/s (M étant un entier positif) étant transmis directement vers et depuis ledit réseau numérique (14) caractérisé en ce que:

tous les signaux de canaux de faible débit binaire dudit canal de faible débit binaire (D) constitués de signaux de N kbit/s (N étant un entier positif et M>N) sont transmis vers et depuis ledit réseau numérique (14) au moyen de ladite unité de conversion de débit binaire (15, 16), l'unité de conversion de débit binaire comportant en outre un dispositif de démultiplexage (16);

ledit dispositif de multiplexage (15) est agencé pour multiplexer [M/N] ou moins de signaux de canaux sortants à faible débit binaire pour obtenir des signaux de canaux sortants multiplexés à faible débit binaire qui sont fournis audit réseau numérique (14); et

ledit dispositif de démultiplexage (16) est agencé pour démultiplexer [M/N] ou moins de signaux de canaux entrants multiplexés à faible débit binaire et de les distribuer vers les terminaux de communications correspondants (ET).

2. Système selon la revendication 1, dans lequel ledit dispositif de démultiplexage (16) est constitué par un démultiplexeur (16-1) et un distributeur (16-2) connecté en série avec lui, le démultiplexeur (16-1) recevant les signaux de canaux entrants multiplexés à faible débit binaire et les démultiplexant, les signaux ainsi démultiplexés étants distribués vers des terminaux de communications respectifs au moyen dudit distributeur (16-2).

3. Système selon la revendication 2, dans lequel chacun desdits signaux de canaux à faible débit binaire est constitué par au moins un signal de commande qui est transmis vers un processeur d'appel (21) qui commande ledit réseau numérique (14) pour assurer la commutation requise desdites lignes par rapport aux signaux de canaux de débit binaire élevé concernés.

4. Système selon la revendication 3, dans lequel chacun desdits signaux de canaux de faible débit binaire est en outre constitué par un signal de données à commuter dans ledit réseau numérique (14) en fonction dudit signal de commande associé.

5. Système selon la revendications 4, dans lequel chaque paquet de signaux de données desdits signaux de données est transmis, par ledit réseau numérique (14), vers et depuis un réseau numérique de commutation de paquets.

6. Système selon la revendication 5, dans lequel chaque paquet de signaux constitue un format de trame contenant un marqueur de discrimination de données/commande (DT/CT) qui indique le paquet de signaux délivre des informations de données ou des informations de commande.

7. Système selon la revendication 6, dans lequel chaque paquet de signaux entrants, non encore démultiplexés, constitue ledit format de trame, comprenant en outre une zone d'identification (LINE) qui indique celle desdites lignes à laquelle le paquet de signaux concerné doit être distribué.

8. Système selon la revendication 7, dans lequel chacun desdits formats de trame est réalisé avec d'autres régions binaires, comprenant un marqueur de début (Fs) indiquant la tête du paquet de signaux, une zone d'adresse (AD) indiquant une destination, une zone de commande (CNT) utilisée pour contenir des informations de commande de paquet, une zone d'informations (I) contenant des informations de données ou des informations de commande, une zone de fréquence de contrôle de trame (FCS) utilisée pour une détection d'erreur du paquet de signaux et un marqueur de fin (Fe) indiquant la fin du paquet de signaux.

9. Système selon la revendication 8, dans lequel ladite unité de conversion de débit binaire (15, 16) est fabriquée comme un processeur de multiplexage/démultiplexage (22) constitué par un microprocesseur (34) et les autres éléments suivants supervisés par ce dernier, c'est à dire une mémoire permanente (ROM) (35) mémorisant des programmes de commande prédéterminés qui sont à fournir au microprocesseur (34), une unité de commande de liaison de données de niveau haut (33) soumise au protocole X.25 de CCITT, ayant pour fonction de recevoir lesdits paquets de signaux apparaissant entre ledit réseau numérique (14) et lesdits terminaux de communications (ET), une mémoire à accès direct (RAM) (36) pour mémoriser momentanément différents ensembles d'informations que contient chacun desdits paquets de signaux une interface d'entrée/sortie du côté de commande (32) traitant des paquets de signaux de commande multiplexés et démultiplexés à fournir, provenant de la (RAM) (36) respectivement pour ledit réseau numérique (14) et l'un correspond desdits terminaux de communications (ET) et une interface d'entrée/sortie de côté de données (31) traitant des paquets de signaux de données multiplexés et démultiplexés à fournir par la (RAM) (36) respectivement vers ledit réseau numérique (14) et l'un correspondant desdits terminaux de communications (ET).

10. Système selon la revendication 9, dans lequel chaque équipement terminal d'abonné consiste en une ou plusieurs unités sélectionnées parmi au moins une unité téléphonique numérique, une unité de facsimilé et une unité de télex.

11. Système selon la revendication 10, dans lequel une communication en duplex intégral est établie par l'intermédiaire de chacune desdites lignes de transmission (11-1 à 11-4) entre chacun desdits terminaux de réseau (NT) et chacun des terminaux de communications correspondants (ET) selon un procédé d'annulation d'écho.

12. Système selon la revendication 10, dans lequel une communication en duplex intégral est effectuée, par l'intermédiaire de chacune desdits lignes de transmission (11-1 à 11-4) entre chacune desdits terminaisons de réseau (NT) et chacun desdits terminaux de communications correspondants (ET) selon un procédé de multiplexage par compression temporelle.

13. Système selon la revendication 10, dans lequel ledit système de communication numérique est réalisé comme un réseau de données de service intégré (ISDN) dans lequel lesdits nombres entiers (M) et (N) sont choisis respectivement à (64) et (16).

# Fig. 1

*Fig. 2*

(1)                                                                $S_H$

(2)                              $S_{L1}$
           L1-1  L1-2  L1-3

(3)                              $S_{L2}$
           L2-1  L2-2  L2-3

(4)                              $S_{L3}$
           L3-1  L3-2  L3-3

(5)                              $S_{L4}$
           L4-1  L4-2  L4-3

(6)                              $S_O(S_I)$
       L1-1
              L2-1    L1-2   L3-2
       L3-1          L4-1

*Fig. 3*

(1)    | 1 | 0 | 1 | 0 |

       1   1  0  0  1   0

(2)

       1  1  0  0  1  0

# Fig. 4

## Fig. 5

## Fig. 6A

| Fs | AD | DT/CT | CNT | I | FCS | Fe |
|----|----|-------|-----|---|-----|-----|

## Fig. 6B

| Fs | AD | DT/CT | LINE | CNT | I | FCS | Fe |
|----|----|-------|------|-----|---|-----|-----|

# Fig. 7A

RECEPTION OF OUTGOING SIGNALS ~ a

LABELING OF LINE NUMBER ~ b

QUEUEING OF SIGNALS ~ c

READING OF BUFFERED SIGNALS ~ d

TRANSFER OF MULTIPLEXED SIGNALS ~ e

# Fig. 7B

```
┌─────────────────────┐
│ RECEPTION   OF      │ ╮ a
│ INCOMING  SIGNALS   │ ╯
└─────────────────────┘
           │
           ▼
┌─────────────────────┐
│ ANALYSIS   OF       │ ╮ b
│ LINE  NUMBERS       │ ╯
└─────────────────────┘
           │
           ▼
┌─────────────────────┐
│ DELETION   OF       │
│ LINE  NUMBERS       │ ╮ c
│ AND  DISTRIBUTION   │ ╯
│ OF   SIGNALS        │
└─────────────────────┘
           │
           ▼
┌─────────────────────┐
│ TRANSFER OF         │
│ SIGNALS TO          │ ╮ d
│ DESTINATIONS        │ ╯
└─────────────────────┘
```